(19) Europäisches Patentamt / European Patent Office / Office européen des brevets

(11) **EP 4 250 272 A1**

(12) **EUROPEAN PATENT APPLICATION**
published in accordance with Art. 153(4) EPC

(43) Date of publication:
**27.09.2023 Bulletin 2023/39**

(21) Application number: **20966992.8**

(22) Date of filing: **25.12.2020**

(51) International Patent Classification (IPC):
$G09B\ 19/00$ (2006.01)     $G01C\ 21/26$ (2006.01)
$G06N\ 20/00$ (2019.01)     $G09B\ 9/042$ (2006.01)
$G09B\ 19/16$ (2006.01)

(52) Cooperative Patent Classification (CPC):
G01C 21/26; G06N 20/00; G09B 9/042;
G09B 19/00; G09B 19/16

(86) International application number:
**PCT/JP2020/048743**

(87) International publication number:
**WO 2022/137506 (30.06.2022 Gazette 2022/26)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **NEC Corporation**
**108-8001 Tokyo (JP)**

(72) Inventors:
• **FUJII Asako**
**Tokyo 108-8001 (JP)**
• **KASHIMA Takuroh**
**Tokyo 108-8001 (JP)**

(74) Representative: **Vossius & Partner**
**Patentanwälte Rechtsanwälte mbB**
**Siebertstraße 3**
**81675 München (DE)**

(54) **DRIVING ASSESSMENT SYSTEM, LEARNING DEVICE, ASSESSMENT RESULT OUTPUT DEVICE, METHOD, AND PROGRAM**

(57)     The function input means 71 accepts input of a cost function expressed as a linear sum of terms in which each feature indicating driving of a driver is weighted by a degree of emphasis. The learning means 72 learns the cost function for each area by inverse reinforcement learning using expert driving data as training data that includes information representing contents of driving of an expert collected for each area. The driving data input means 73 accepts input of user driving data including information indicating driving of a subject whose driving is evaluated, information indicating environment when driving, and position information where these pieces of information were obtained. The evaluation means 74 identifies an area where a user drives from the position information, selects the cost function corresponding to the area, applies the information indicating the environment when the subject drives to the selected cost function to estimate the driving of the expert in the same environment, and outputs an evaluation result comparing estimated driving of the expert with the driving of the subject.

FIG. 8

**Description**

**Technical Field**

This invention relates to a driving evaluation system and a driving evaluation method for evaluating driving of a subject, a learning device, a learning method and a learning program for learning a cost function used to evaluation of driving, and an evaluation result output device, an evaluation result output method and an evaluation result output program for outputting a driving evaluation result.

**Background Art**

Various methods are known to evaluate running of a driver using various indicators and model data. For example, sudden acceleration, sudden braking, and abrupt steering can be used as indicators to judge whether driving is ecological or not.

As one of other systems, for example, patent literature 1 describes a driving skill evaluation system which automatically evaluates a driving skill of a subject. The system described in patent literature 1 records sample driving data and learns running patterns of model driving based on the recorded driving data.

**Citation List**

**Patent Literature**

PTL 1: International Publication No. 2020/049737

**Summary of Invention**

**Technical Problem**

However, it is difficult to objectively evaluate whether driving is safe (for example, whether accidents are decreasing) only by detecting sudden acceleration, sudden braking, and abrupt steering as described above. In contrast, learning model running patterns, such as those described in patent literature 1, makes it possible to objectively evaluate a driving skill of a subject.

Here, the system described in patent literature 1 automatically evaluates a driving skill of a subject in a driving school, etc. by learning taking into account running positions of a vehicle in the evaluation. However, the running pattern of a model driver learned by the system described in patent literature 1 is hardly capable of evaluating driving according to the actual driving environment.

For example, in an area with low traffic volume, driving at a speed slower than the speed limit would not be considered dangerous driving. On the other hand, if a driver continues to drive at a low speed in an area with heavy traffic, it is likely to cause traffic congestion and may be evaluated as dangerous driving. Further, the evaluation of driving reflects regional characteristics, cultures, times, etc., making it difficult to define safe driving on a global basis. It is difficult to compensate for evaluation including such contents only by model driving in driving schools.

Therefore, it is desirable to be able to suppress evaluations based on erroneous indicators and conduct an evaluation that lead to safe driving by taking into account the area in which the driver is operating.

It is therefore an object of the present invention to provide a driving evaluation system and a driving evaluation method that can evaluate driving of a subject by taking into account the driving area, an evaluation result output device, an evaluation result output method and an evaluation result output program for outputting a driving evaluation result, and a learning device, a learning method and a learning program for learning a cost function used to the evaluation of driving.

**Solution to Problem**

The driving evaluation system according to the present invention includes function input means for accepting input of a cost function expressed as a linear sum of terms in which each feature indicating driving of a driver is weighted by a degree of emphasis, learning means for learning the cost function for each area by inverse reinforcement learning using expert driving data as training data that includes information representing contents of driving of an expert collected for each area, driving data input means for accepting input of user driving data including information indicating driving of a subject whose driving is evaluated, information indicating environment when driving, and position information where these pieces of information were obtained, and evaluation means for identifying an area where a user drives from the position information, selecting the cost function corresponding to the area, applying the information indicating the environment when the subject drives to the selected cost function to estimate the driving of the expert in the same environment, and outputting an evaluation result comparing estimated driving of the expert with the driving of the subject.

The learning device according to the present invention includes function input means for accepting input of a cost function expressed as a linear sum of terms in which each feature indicating driving of a driver is weighted by a degree of emphasis, and learning means for learning the cost function for each area by inverse reinforcement learning using expert driving data as training data that includes information representing contents of driving of an expert collected for each area.

The evaluation result output device according to the present invention includes driving data input means for accepting input of user driving data including information indicating driving of a subject whose driving is evaluated, information indicating environment when driving, and position information where these pieces of information were obtained, and valuation means for identifying an area where a user drives from the position information, selecting a cost function corresponding to the area among cost functions each learned for each area by inverse reinforcement learning using expert driving data as training data that includes information representing contents of driving of an expert collected for each area and expressed as a linear sum of terms in which each feature indicating driving of a driver is weighted by a degree of emphasis, applying the information indicating the environment when the subject drives to the selected cost function to estimate the driving of the expert in the same environment, and outputting an evaluation result comparing estimated driving of the expert with the driving of the subject.

The driving evaluation method according to the present invention includes accepting input of a cost function expressed as a linear sum of terms in which each feature indicating driving of a driver is weighted by a degree of emphasis, learning the cost function for each area by inverse reinforcement learning using expert driving data as training data that includes information representing contents of driving of an expert collected for each area, accepting input of user driving data including information indicating driving of a subject whose driving is evaluated, information indicating environment when driving, and position information where these pieces of information were obtained, identifying an area where a user drives from the position information, and selecting the cost function corresponding to the area, applying the information indicating the environment when the subject drives to the selected cost function to estimate the driving of the expert in the same environment, and outputting an evaluation result comparing estimated driving of the expert with the driving of the subject.

The learning method according to the present invention includes accepting input of a cost function expressed as a linear sum of terms in which each feature indicating driving of a driver is weighted by a degree of emphasis, and learning the cost function for each area by inverse reinforcement learning using expert driving data as training data that includes information representing contents of driving of an expert collected for each area.

The evaluation result output method according to the present invention includes accepting input of user driving data including information indicating driving of a subject whose driving is evaluated, information indicating environment when driving, and position information where these pieces of information were obtained, identifying an area where a user drives from the position information, and selecting a cost function corresponding to the area among cost functions each learned for each area by inverse reinforcement learning using expert driving data as training data that includes information representing contents of driving of an expert collected for each area and expressed as a linear sum of terms in which each feature indicating driving of a driver is weighted by a degree of emphasis, applying the information indicating the environment when the subject drives to the selected cost function to estimate the driving of the expert in the same environment, and outputting an evaluation result comparing estimated driving of the expert with the driving of the subject.

The learning program according to the present invention causes a computer to execute a function input process of accepting input of a cost function expressed as a linear sum of terms in which each feature indicating driving of a driver is weighted by a degree of emphasis, and a learning process of learning the cost function for each area by inverse reinforcement learning using expert driving data as training data that includes information representing contents of driving of an expert collected for each area.

The evaluation result output program according to the present invention causes a computer to execute a driving data input process of accepting input of user driving data including information indicating driving of a subject whose driving is evaluated, information indicating environment when driving, and position information where these pieces of information were obtained, and an evaluation process of identifying an area where a user drives from the position information, selecting a cost function corresponding to the area among cost functions each learned for each area by inverse reinforcement learning using expert driving data as training data that includes information representing contents of driving of an expert collected for each area and expressed as a linear sum of terms in which each feature indicating driving of a driver is weighted by a degree of emphasis, applying the information indicating the environment when the subject drives to the selected cost function to estimate the driving of the expert in the same environment, and outputting an evaluation result comparing estimated driving of the expert with the driving of the subject.

**Advantageous Effects of Invention**

According to this invention, driving of a subject can be evaluated taking into account the driving area.

**Brief Description of Drawings**

[FIG. 1] It depicts a block diagram showing a configuration example of an exemplary embodiment of a driving evaluation system according to the present invention.
[FIG. 2] It depicts an explanatory diagram showing an example of driving data.
[FIG. 3] It depicts a block diagram showing a configuration example of a learning unit.
[FIG. 4] It depicts an explanatory diagram for explaining an example of a process of visualizing differences when driving.
[FIG. 5] It depicts an explanatory diagram for explaining an example of a process of scoring and outputting a difference in driving.
[FIG. 6] It depicts a flowchart showing an example of an operation of a learning device.
[FIG. 7] It depicts a flowchart showing an example of an operation of an evaluation result output device.
[FIG. 8] It depicts a block diagram showing an overview of a driving evaluation system according to the present invention.
[FIG. 9] It depicts a block diagram showing an overview of a learning device according to the present invention.
[FIG. 10] It depicts a block diagram showing an overview of an evaluation result output device according to the present invention.

**Description of Embodiments**

Hereinafter, exemplary embodiments of the present invention will be explained with reference to the drawings.

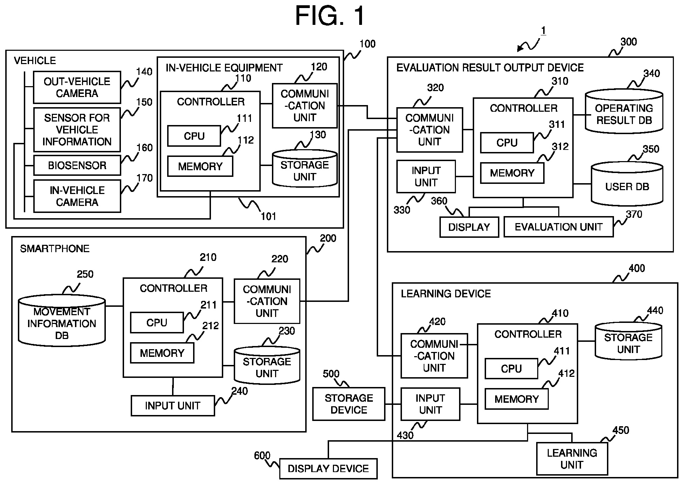

FIG. 1 is a block diagram showing a configuration example of an exemplary embodiment of a driving evaluation system according to the present invention. The driving evaluation system 1 of this exemplary embodiment includes an evaluation result output device 300 and a learning device 400. The evaluation result output device 300 is connected to a vehicle 100 equipped with an in-vehicle equipment 101 and a smartphone 200, and is also connected to the learning device 400.
In this exemplary embodiment, it is assumed that the vehicle 100 (more specifically, the in-vehicle equipment 101) and the smartphone 200 move in the same manner, and that the smartphone 200 is used for inputting various information, giving instructions to the in-vehicle equipment 101, and obtaining position information of the vehicle 100. By using a handy smartphone 200, it is possible to simplify input of movement information to the vehicle 100 (more specifically, the in-vehicle equipment 101) and processing when expanding the functions of the vehicle 100. However, the vehicle 100 itself may be connected and configured so that the in-vehicle equipment 101 integrates the functions of the smartphone 200.
Further, this exemplary embodiment illustrates a case in which the evaluation result output device 300 is provided separately from the vehicle 100 (more specifically, the in-vehicle equipment 101). However, the evaluation result output device 300 may be configured to be realized as an integral part of the in-vehicle equipment 101.
The learning device 400 is connected to a storage device 500 that stores various information used for learning and a display device 600 that displays the learning results. The storage device 500 is realized, for example, by an external storage server. The display device 600 is realized, for example, by a display. The learning device 400 may be configured to include one or both of the storage device 500 and the display device 600.
The storage device 500 stores data representing an operating result of the vehicle (hereinafter referred to as "driving data") as various types of information used for learning. The driving data includes information indicating driving of a driver (for example, operation information to operate the vehicle), information indicating the environment when the driver operates the vehicle, and position information where these pieces of information were obtained (i.e., position information indicating where the driver operates the vehicle). These pieces of information can be referred to as features that indicate the characteristics when driving. The information indicating the environment may include conditions outside the vehicle as well as the driver's own attributes. The storage device 500 may store only the driving data of the driver defined as an expert, or may store driving data including general drivers. The definition of the expert is described below.

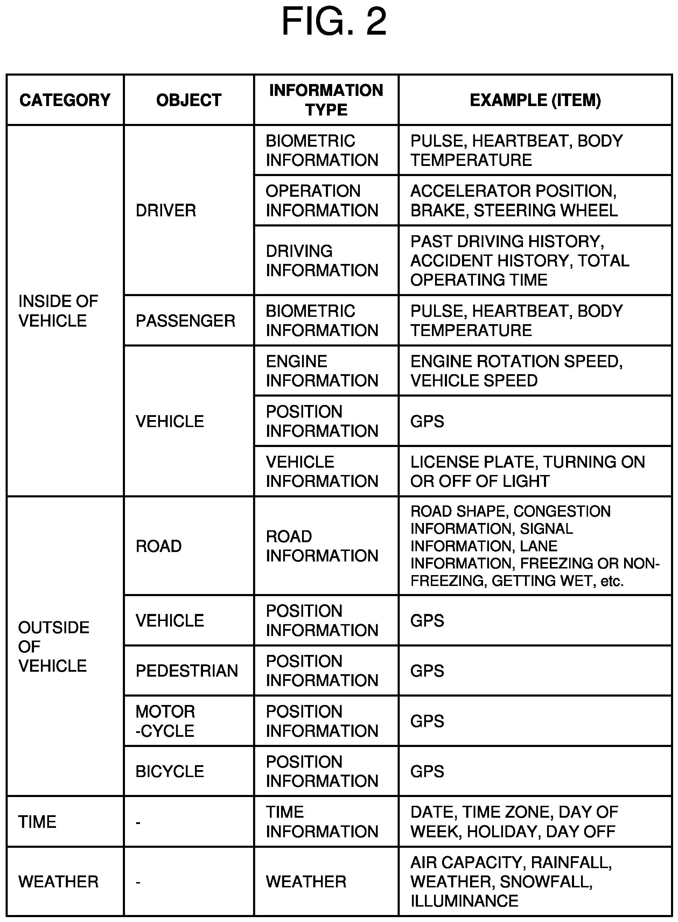

FIG. 2 is an explanatory diagram showing an example of driving data. The driving data illustrated in FIG. 2 includes items that are classified into four major categories (information regarding a vehicle (in-vehicle information), out-vehicle information, time information, and weather information). One example of the information indicating the driving of a driver is operation information (accelerator position, brake operation, steering wheel operation, etc.) and the vehicle speed in the engine information shown in FIG. 2, while the position information indicating the driving area corresponds to position information obtained by GPS.

The driving data illustrated in FIG. 2 is an example, and the driving data may include all or some of the items illustrated in FIG. 2. The driving data may include items other than those illustrated in FIG. 2.

As described above, the vehicle 100 illustrated in this exemplary embodiment includes an in-vehicle equipment 101. Various sensors are connected to the in-vehicle equipment 101, including an out-vehicle camera 140, a sensor 150 for vehicle information, a biosensor 160, and an in-vehicle camera 170. The in-vehicle equipment 101 has a controller 110 including a CPU (Central Processing Unit) 111 and a memory 112, a communication unit 120, and a storage unit 130. The communication unit 120 performs various communications with the evaluation result output device 300. The storage unit 130 stores various information used by the controller 110 for processing.

The out-vehicle camera 140 is a camera that takes images of the outside of the vehicle 100. The out-vehicle camera 140 may, for example, take images of other vehicles, pedestrians, motorcycles, bicycles, etc. that are present outside the vehicle. The out-vehicle camera 140 may also take images of the condition of the road on which the vehicle 100 is running (road shape, congestion information, signal information, etc.) together. At that time, the controller 110 may, for example, perform object recognition processing of vehicles, pedestrians, and other objects from the taken images.

The sensor 150 for vehicle information detects various states of the vehicle 100. For example, the sensor 150 for vehicle information may detect information such as an engine rotation speed and an accelerator position based on the CAN (Controller Area Network).

The biosensor 160 detects various biometric information of the driver. The biometric sensor 160 may, for example, be a sensor capable of detecting a pulse, a heartbeat, and a body temperature of the driver. The biosensor 160 may detect not only biometric information of the driver but also biometric information of passengers.

The in-vehicle camera 170 is a camera that takes images of the interior of the vehicle. The in-vehicle camera 170 may, for example, take images of the presence or absence of passengers.

The sensors described in FIG. 1 are examples, and some or all of these sensors may be connected to the in-vehicle equipment 101, or other sensors may be connected to the in-vehicle equipment 101. The information detected by these sensors is stored in the storage unit 130 and also transmitted to the evaluation result output device 300 through the communication unit 120.

The smartphone 200 includes a controller 210 having a CPU 211 and a memory 212, a communication unit 220, a storage unit 230, an input unit 240, and a movement information database ("DB") 250.

The controller 210 controls various processes performed by the smartphone 200. The communication unit 220 performs various communications with the evaluation result output device 300. The storage unit 230 stores various information used by the controller 210 for processing. The input unit 240 accepts inputs of control to the in-vehicle equipment 101 from the user as well as various inputs to the smartphone 200.

The movement information DB 250 stores movement information of the vehicle 100. Specifically, the movement information DB 250 stores the position information of the vehicle 100 obtained from the GPS (Global Positioning System) by the controller 210 in chronological order. This makes it possible to map the position information of the vehicle 100 (i.e., position information indicating where the vehicle 100 has been driven) to the driving data.

The learning device 400 includes a controller 410 having a CPU 411 and a memory 412, a communication unit 420, an input unit 430, a storage unit 440, and a learning unit 450.

The controller 410 controls the processing of the learning unit 450 described below. The communication unit 420 performs various communications with the evaluation result output device 300. The storage unit 440 stores various information used by the controller 410 and the learning unit 450 for processing. The storage unit 440 may also store the driving data for which input is accepted by the input unit 430 described below. The storage unit 440 is realized by a magnetic disk, for example.

The input unit 430 accepts input of driving data from the storage device 500. The input unit 430 may obtain the driving data from the storage device 500 in response to an explicit instruction to the learning device 400, or may obtain the driving data in response to a notification from the storage device 500. The input unit 430 may also store the obtained driving data in the storage unit 440. Since the accepted driving data is data used for learning by the inverse reinforcement learning unit 453 described below, the driving data may be referred to as expert driving data or training data.

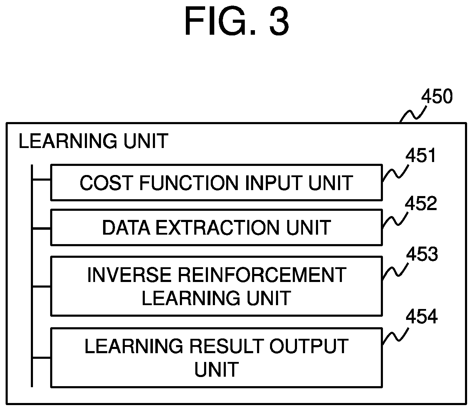

FIG. 3 is a block diagram showing a configuration example of a learning unit 450. The learning unit 450 includes a cost function input unit 451, a data extraction unit 452, an inverse reinforcement learning unit 453, and a learning result output unit 454.

The cost function input unit 451 accepts input of a cost function to be used for learning by the inverse reinforcement learning unit 453 described below. Specifically, the cost function input unit 451 accepts input of a cost function expressed as a linear sum of terms in which each feature indicating the driving of the driver is weighted by a degree of emphasis, as illustrated in FIG. 2. The degree of emphasis can be said to represent the intention in the evaluation. Therefore, the value calculated by the cost function can be said to be an evaluation index used to evaluate driving.

The cost function input unit 451 may accept input of the cost function that includes terms in which not only the feature indicating the driving of the driver but also each feature indicating the environment when driving is weighted by the degree of emphasis. The feature indicating the driving of the driver is, for example, a speed, a distance from the vehicle in front, and an amount of accelerator pedal depression. The features indicating the environment when driving are a road shape, congestion information, etc., for example.

The cost function input unit 451 may also accept input of constraints to be satisfied as well as the cost function. The cost function and the constraints are predefined by an analyst or others. That is, candidates of feature to be considered when evaluating driving are selected in advance by an analyst, etc., and a cost function is defined by them.

For example, in case a speed, a distance to the vehicle in front, and an amount of accelerator pedal depression are selected as candidates of feature when evaluating driving, the cost function is represented by Equation 1 illustrated below.

$$\text{Cost function} = \alpha_1 \times \text{speed} + \alpha_2 \times \text{distance to vehicle in front} + \alpha_3 \times \text{amount of}$$

$$\text{accelerator pedal depression} + \beta \qquad \text{(Equation 1)}$$

The data extraction unit 452 extracts training data for each area from the driving data accepted by the input unit 430. Specifically, the data extraction unit 452 extracts training data for each area based on the position information from which the driving data (training data) was obtained. For example, the data extraction unit 452 may extract training data by determining the area from latitude and longitude obtained from GPS.

In addition, the data extraction unit 452 may perform the process of converting (for example, arithmetic operations, conversion to binary values, etc.) items in the driving data to features, integrating data, cleansing data, etc. to match the features included in the cost function.

In the inverse reinforcement learning described below, the driving data of a person who is a good driver (so-called expert) is required. Therefore, when the driving data includes driving data of ordinary drivers, the data extraction unit 452 extracts driving data of the expert from the candidate driving data based on predetermined criteria.

The method of extracting driving data of the expert is arbitrary and can be predetermined by an analyst or others. For example, the data extraction unit 452 may consider drivers with a long total driving time and drivers with a small history of accidents and violations as the expert, and extract driving data of such drivers as the driving data of the expert.

Further, the data extraction unit 452 may preferentially select, among driving data of the expert, the driving data of drivers associated with the relevant area as more appropriate driving data of the expert. This is because drivers residing in the relevant area are considered to have a better understanding of the conditions in that area, for example. The data extraction unit 452 may, for example, determine the relevant area to the driver from the license plate.

The inverse reinforcement learning unit 453 learns the cost function for each area by inverse reinforcement learning using training data for each area extracted by the data extraction unit 452. Specifically, the inverse reinforcement learning unit 453 learns the cost function for each area by inverse reinforcement learning using driving data of the expert collected for each area as training data. In other words, this training data includes information that represents the contents of the driving data of the expert. This training data may also include information indicating the environment when driving.

The method by which the inverse reinforcement learning unit 453 performs inverse reinforcement learning is arbitrary. For example, the inverse reinforcement learning unit 453 may learn the cost function by repeating the execution of a mathematical optimization process that generates driving data of the expert based on the input cost function and constraints, and a cost function estimation process to update parameters (degree of emphasis) of the cost function so that the difference between the generated driving data of the expert and the training data is reduced.

The learning result output unit 454 outputs the learned cost function. Specifically, the learning result output unit 454 outputs features included in the learned cost function for each area and the weights for the features in association with each other. The learning result outputting unit 454 may display the contents of the cost function on the display device 600 or store them in the storage unit 440. By displaying the contents of the cost function on the display device 600, it is possible to visualize the items to be emphasized in each area.

For example, it is assumed that the parameters of the cost function (degree of emphasis) illustrated in the above Equation 1 are learned as in Equation 2 illustrated below.

$$\text{Cost function} = 100 \times \text{speed} + 50 \times \text{distance to vehicle in front} + 10 \times \text{amount of accelerator}$$

$$\text{pedal depression} \qquad \text{(Equation 2)}$$

In this case, the learning result output unit 454 may output the weight of the evaluation of [speed, distance to vehicle in front] as [100, 50, 10].

The learning result output unit 454 may output a predetermined number of features in order of degree of emphasis as evaluation weights. In this way, it becomes possible to grasp the features that better reflect the intention of the expert.

The learning unit 450 (more specifically, the cost function input unit 451, the data extraction unit 452, the inverse reinforcement learning unit 453, and the learning result output unit 454) is realized by a processor of a computer operating according to a program (learning program).

For example, the program may be stored in the memory 440 of the learning device 400, and the processor may read the program and operate according to the program as the learning unit 450 (more specifically, the cost function input unit 451, the data extraction unit 452, the inverse reinforcement learning unit 453, and the learning result output unit 454). The functions of the learning unit 450 (more specifically, the cost function input unit 451, the data extraction unit 452, the inverse reinforcement learning unit 453, and the learning result output unit 454) may be provided in a SaaS (Software as a Service) format.

The cost function input unit 451, the data extraction unit 452, the inverse reinforcement learning unit 453, and the learning result output unit 454 may be realized by dedicated hardware. Some or all of the components of each device may be realized by a general-purpose or dedicated circuit (circuitry), a processor, etc., or a combination thereof. They may be configured by a single chip or by multiple chips connected through a bus. Some or all of the components of each device may be realized by a combination of the above-mentioned circuit, etc. and a program.

When some or all of the components of the learning unit 450 (more specifically, the cost function input unit 451, the data extraction unit 452, the inverse reinforcement learning unit 453, and the learning result output unit 454) are realized by multiple information processing devices or circuits, etc., the multiple information processing devices or circuits may be arranged in a centralized or distributed manner. For example, the information processing devices, circuits, etc. may be realized as a client-server system, a cloud computing system, or the like, each of which is connected through a communication network.

The learning unit 450 may be included in the controller 410 itself. In this case, the controller 410 may read a program (learning program) stored in the memory 412 by the CPU 411 and operate as the learning unit 450 according to the program.

The evaluation result output device 300 includes a controller 310 having a CPU 311 and a memory 312, a communication unit 320, an input unit 330, an operating result DB 340, a user DB 350, a display 360, and an evaluation unit 370.

The controller 310 controls the process of the evaluation unit 370 described below. The communication unit 320 performs various communications with the vehicle 100 (more specifically, the in-vehicle equipment 101), the smartphone 200, the learning device 400, and others.

The operating result DB 340 stores driving data generated based on various information sent from the in-vehicle equipment 101 and smartphone 200. The user DB 350 stores various information (for example, age, gender, past driving history, self history, total driving time, etc.) of a user whose driving is to be evaluated. The operating result DB 340 and the user DB 350 are realized by a magnetic disk and the like, for example.

The input unit 330 accepts input of the driving data of a user received through the communication unit 320. Specifically, the input unit 330 accepts input of driving data, which includes information indicating the driving of the subject whose driving is evaluated, information indicating the environment when driving, and position information where these pieces of information were obtained. In order to distinguish it from the driving data of the expert (expert driving data) described above, the driving of the user input here may be noted as user driving data.

The evaluation unit 370 outputs an evaluation result comparing the driving of the expert with the driving of the subject. Specifically, the evaluation unit 370 identifies the area in which the user drives from the position information and selects the cost function corresponding to the area. Next, the evaluation unit 370 applies the information of the environment in which the subject drives to the selected cost function to estimate the driving of the expert in the same environment. The evaluation unit 370 then outputs an evaluation result comparing estimated driving of the expert with driving of the subject. The evaluation unit 370 may display the evaluation result on the display 360.

The evaluation unit 370 may evaluate driving of the user collectively (i.e., from the start of operation to the end of operation) or sequentially evaluate during driving of the user.

The display 360 is a display device that outputs an evaluation result by the evaluation unit 370. The evaluation result output device 300 may transmit the contents to be displayed on the display 360 to the in-vehicle equipment 101 or the smartphone 200 for display.

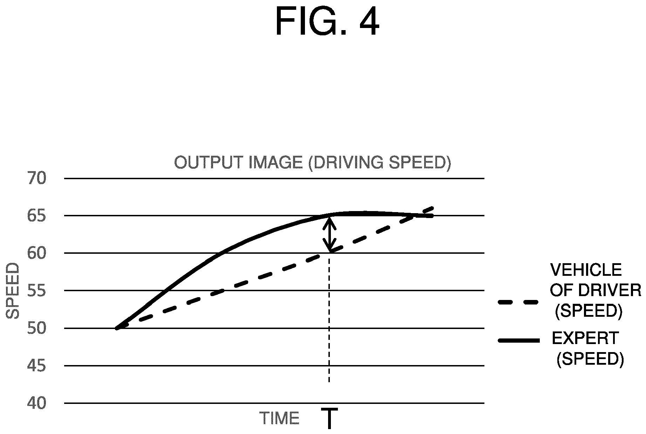

Hereinafter, specific examples of evaluation result output by the evaluation unit 370 will be explained. The first specific example is an example of visualizing the difference between the driving of the subject and the driving of the expert. FIG. 4 is an explanatory diagram for explaining the first specific example (an example of a process of visualizing the difference when driving).

A situation in which the subject is driving in a certain environment (condition) is assumed. Here, as a specific example, the following environment (condition): "Minato ward in Tokyo, a gentle curve, traffic jam" is assumed. In this environment (condition), the subject is assumed to drive at a certain time T "at a speed of 60 km/h, with the amount of accelerator pedal depression 20%".

Here, the evaluation unit 370 estimates the driving of the expert in the same environment (condition) based on a learned cost function. In this case, for example, the expert is "an instructor at a driving school in Minato ward in Tokyo" who is a driver associated with the relevant area. As a result, for example, the driving of the expert is estimated to be "65 km/h and the amount of accelerator pedal depression 30%". The evaluation unit 370 calculates differences between the driving of the subject and the driving of the expert in chronological order, based on this estimation result. The evaluation unit 370 may visualize this calculation result as illustrated in FIG. 4.

Moreover, it is assumed that the condition for notifying the driver (notification condition) is defined as "when the speed difference exceeds ±5 km", for example. In the example shown in FIG. 4, the speed difference from the driving of the expert at time T is "+5 km". Therefore, the evaluation unit 370 may notify the driver to "step on the accelerator harder" by voice or display in order to increase the speed. In this way, the evaluation unit 370 may notify the contents indicating the difference when the calculated difference meets the predetermined notification condition.

The condition for notification may be defined based on the learned cost function. For example, the condition for notification may be defined based on the feature of the cost function with a high degree of emphasis. In this way, by using the learned cost function, it becomes possible to define the condition for notification by focusing on the evaluation item that should be given more attention.

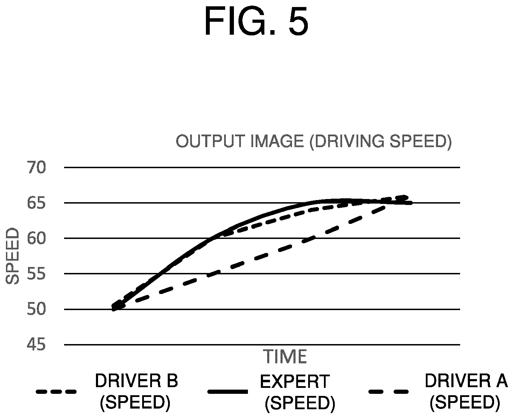

Next, the second specific example of evaluation result will be explained. The second specific example is an example in which a difference between the driving of the subject and the driving of the expert is scored and output. FIG. 5 is an explanatory diagram for explaining the second specific example (an example of a process of scoring and outputting a difference in driving).

A situation where the subject is also driving under the same environment (condition) as in the first specific example is assumed, and it is assumed that the evaluation unit 370 estimates the driving of the expert in the same manner. In the first specific example, the method of notifying when the speed difference exceeds a predetermined threshold is illustrated. In this specific example, the evaluation unit 370 cumulatively adds scores in chronological order based on a predetermined method of scoring according to a difference between the driving of the expert and the driving of the subject, and displays the added result.

For example, it is assumed that the scoring method is defined as "the score is deducted when the difference from the expert is 5 km/h or more, and the score is added when the difference from the expert remains less than a state of 5 km/h for 10 seconds. The evaluation unit 370 cumulatively adds scores based on the defined method. For example, the evaluation unit 370 may display the scoring result superimposed on a graph showing the difference between the driving of the expert and the driving of the subject, as illustrated in FIG. 5. In the example shown in FIG. 5, the driving of the driver A has many original score because of the many differences from the expert throughout the entire run, and the driving of the deriver B has many additional scores because of almost no differences from the expert.

The evaluation unit 370 may not only score one running record of an individual but also calculate the cumulative value of multiple running records. This allows, for example, scoring over a predetermined period of time (month) or scoring by area.

In addition, the evaluation unit 370 may sum up magnitude of the differences by feature and output an evaluation corresponding to the feature with the largest difference. For example, when the difference in feature indicating acceleration at startup is large, the evaluation unit 370 may output a message such as "please suppress acceleration at startup".

The evaluation unit 370 is realized by a processor of a computer that operates according to a program (evaluation result output program). The evaluation unit 370 may also be included in the controller 310 itself.

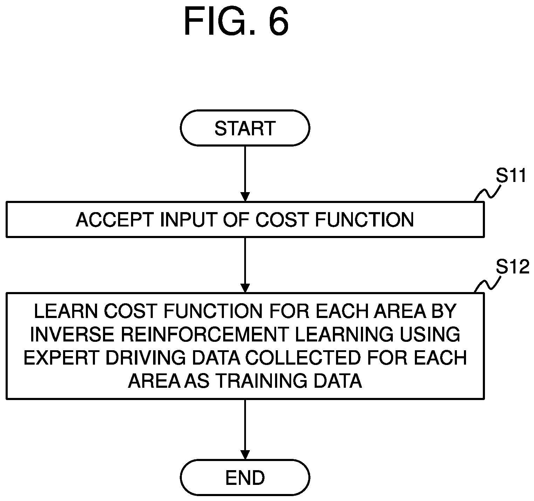

Next, an example of the operation of driving evaluation system of this exemplary embodiment will be explained. FIG. 6 is a flowchart showing an example of an operation of the learning device 400 of this exemplary embodiment. The input unit 430 accepts input of a cost function (step S11). The learning unit 450 learns the cost function for each area by inverse reinforcement learning using expert driving data that includes information representing contents of driving of an expert collected for each area as training data (step S12).

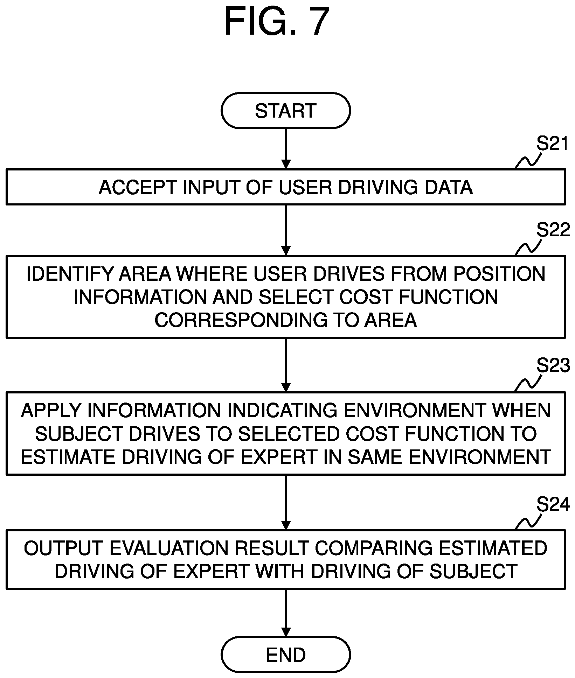

FIG. 7 is a flowchart showing an example of an operation of an evaluation result output device 300 of this exemplary embodiment. The input unit 330 accepts input of user driving data, including information indicating driving of a subject whose driving is evaluated, information indicating environment when driving, and position information where these pieces of information were obtained (step S21).

The evaluation unit 370 identifies an area where a user drives from the position information and selects a cost function corresponding to the area (step S22). The evaluation unit 370 applies the information indicating the environment when the subject drives to the selected cost function to estimate the driving of the expert in the same environment (step S23). The evaluation unit 370 then outputs an evaluation result comparing estimated driving of the expert with the driving of the subject (step S24).

As described above, in this exemplary embodiment, the input unit 430 accepts input of the cost function, and the learning unit 450 learns the cost function for each area by inverse reinforcement learning using the expert driving data collected for each area as training data. The input unit 330 accepts input of the user driving data, and the evaluation unit 370 identifies the area where the user drives from the position information and selects a corresponding cost function, and applies the information indicating the environment when the subject drives to the selected cost function to estimate the driving of the expert in the same environment. Then, the evaluation unit 370 outputs an evaluation result comparing the estimated driving of the expert with the driving of the subject. Therefore, the driving of the subject can be evaluated in consideration of the area where the subject drives.

For example, it is difficult to define "good driving". It is much more difficult when regional characteristics are taken into account. Further, a huge number of parameters are required to extract individual characteristics, for example, "good at starting on a slope, but not good at driving around curves".

On the other hand, in the present invention, the learning unit 450 defines the expert who is assumed to drive well (for example, an expert driver, a cab driver, a driving school instructor, a police car driver) and extracts characteristic of the driver by machine learning from the driving data of the expert. This makes it possible to extract feature for evaluating driving.

Further, in this exemplary embodiment, it becomes possible to extract necessary characteristics for the evaluation of driving in each area as a different evaluation axis from driving skill by extracting driver characteristics from the driving data of residents in each are.

In addition, since the learning unit 450 (more specifically, the learning result output unit 454) visualizes the weights of the evaluation in this exemplary embodiment, it is possible to extract items that need to be improved.

The following are examples of the application of the driving evaluation system of this exemplary embodiment.

As the first example, the application to OEM (Original Equipment Manufacturers) can be considered. By using the driving evaluation system of this exemplary embodiment, the actual usage tendency of the vehicle can be understood, making it possible to develop vehicles dedicated to the target country or area (for example, vehicles dedicated to cold areas, vehicles dedicated to Nagoya, etc.), thereby making it possible to make vehicles of high social value.

Further, regarding the occurrence of problems, since it is possible to grasp a trend of problem through actual driving, it becomes possible to evaluate the need to market vehicles with a safe driving notification function or to evaluate automatic driving methods, for example.

As the second example, the application to general users can be considered. By using the driving evaluation system of this exemplary embodiment, users will be able to drive safely even in places they are visiting for the first time. In addition, since the system clearly indicates the operation of a people who is a good driver, it also makes it possible to specifically learn a skill that is lacking. A specific method for general users to learn is, for example, to be notified by the navigation system based on their driving ("be careful in this area, they will close the gap between cars" or "accelerate a little more").

Aa the third example, the application to driving schools can be considered. By using the driving evaluation system of this exemplary embodiment, it is possible to shape the instruction given by instructors to students, thereby improving the quality of the instructors as well as the skills of graduates. For example, it is conceivable to apply the driving evaluation system of this exemplary embodiment to a driving simulator to visualize the difference between the driving of students and that of the expert. Furthermore, it becomes possible to clearly identify driving skills and driving manners that are area-specific and necessary.

As the fourth example, the application to insurance companies can be considered. By using the driving evaluation system of this exemplary embodiment, it becomes possible to identify a driving trend for each area, thus making it possible to set up vehicle insurance for different areas (changing insurance fees based on driving ability levels). The resulting increase in safe driving will also reduce compensation payments and lower insurance fees, resulting in a competitive advantage in the market.

Specifically, by scoring driving, it will be possible to offer discounts on insurance fees to policyholders with a predetermined score or higher, or to target solicitations to those eligible with a higher score (i.e., assumed to have fewer accidents) rather than age.

As the fifth example, the application to national and local governments can be considered. By using the driving evaluation system of this exemplary embodiment, it becomes possible to review speed limits, etc. according to the area. In addition, if accidents within an area can be reduced, it becomes possible to appeal to the outside world that the area is safe. Specifically, the speed limit can be reviewed by comparing the difference between the running speed by the expert and the legal speed limit. Further, it would also be possible to identify a driving trend in areas with high accident rates and directly alert peoples, or to develop infrastructures that would reduce accidents.

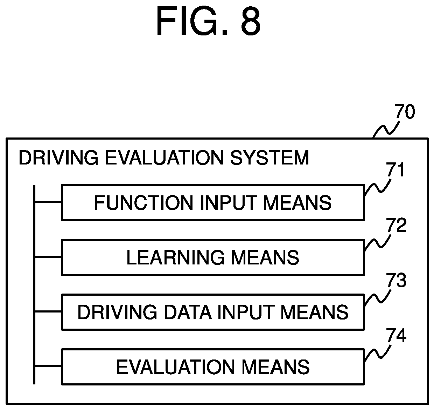

Next, an overview of the present invention will be explained. FIG. 8 is a block diagram showing an overview of the driving evaluation system according to the present invention. The driving evaluation system 70 (for example, the driving evaluation system 1) according to the present invention includes function input means 71 (for example, the cost function input unit 451) for accepting input of a cost function expressed as a linear sum of terms in which each feature indicating driving of a driver is weighted by a degree of emphasis, learning means 72 (for example, the inverse reinforcement learning unit 453) for learning the cost function for each area by inverse reinforcement learning using expert driving data as training data that includes information representing contents of driving of an expert collected for each area, driving data input means 73 (for example, the input unit 330) for accepting input of user driving data including information indicating driving of a subject whose driving is evaluated, information indicating environment when driving, and position information where these pieces of information were obtained, and evaluation means 74 (for example, the evaluation unit 370) for identifying an area where a user drives from the position information, selecting the cost function corresponding to the area, applying the information indicating the environment when the subject drives to the selected cost function to estimate the driving of the expert in the same environment, and outputting an evaluation result comparing estimated driving of the expert with the driving of the subject.

Such a configuration allows the evaluation of the driving of the subject, taking into account the area where the driver drives.

The driving evaluation system 70 may include learning result output means (for example, the learning result output unit 454) for outputting features included in the cost function and weights for the features in association with each other.

The driving evaluation system 70 may include data extraction means (for example, the data extraction unit 452) for extracting the training data for each area. Then, the learning means 72 may learn the cost function for each area using the extracted training data for each area.

Further, the data extraction means may extract the training data of the expert from candidate training data based on predetermined criteria.

The evaluation means 74 may calculate differences between the driving of the expert and the driving of the subject in chronological order, and notify contents indicating the difference when the calculated difference meets a predetermined notification condition.

The evaluation means 74 may cumulatively add scores in chronological order based on a predetermined method of scoring according to a difference between the driving of the expert and the driving of the subject, and display an added result.

The function input means 71 may accept input of the cost function that includes terms as the linear sum in which each feature indicating the environment when driving is weighted by the degree of emphasis.

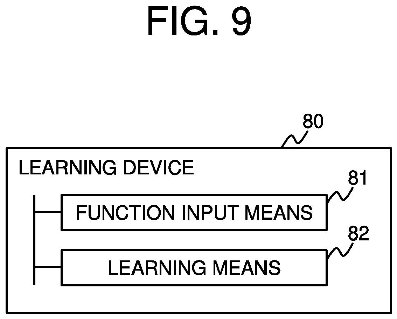

FIG. 9 is a block diagram showing an overview of a learning device according to the present invention. The learning device 80 (for example, the learning device 400) according to the present invention includes function input means 81 and learning means 82. The details of the function input means 81 and the learning means 82 are the same as those of the function input means 71 and the learning means 72 illustrated in FIG. 8.

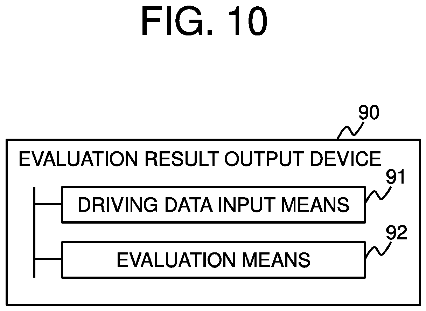

FIG. 10 is a block diagram showing an overview of an evaluation result output device according to the present invention. The evaluation result output device 90 (for example, the evaluation result output device 300) according to the present invention includes driving data input means 91 and evaluation means 92. The details of the driving data input means 91 and the evaluation means 92 are the same as those of the driving data input means 73 and the evaluation means 74 illustrated in FIG. 8.

Apart of or all of the above exemplary embodiments may also be described as, but not limited to, the following supplementary notes.

(Supplementary note 1) A driving evaluation system comprising:

function input means for accepting input of a cost function expressed as a linear sum of terms in which each feature indicating driving of a driver is weighted by a degree of emphasis;
learning means for learning the cost function for each area by inverse reinforcement learning using expert driving data as training data that includes information representing contents of driving of an expert collected for each area;
driving data input means for accepting input of user driving data including information indicating driving of a subject whose driving is evaluated, information indicating environment when driving, and position information where these pieces of information were obtained; and
evaluation means for identifying an area where a user drives from the position information, selecting the cost function corresponding to the area, applying the information indicating the environment when the subject drives to the selected cost function to estimate the driving of the expert in the same environment, and outputting an evaluation result comparing estimated driving of the expert with the driving of the subject.

(Supplementary note 2) The driving evaluation system according to Supplementary note 1, further comprising learning result output means for outputting features included in the cost function and weights for the features in association with each other.

(Supplementary note 3) The driving evaluation system according to Supplementary note 1 or 2, further comprising

data extraction means for extracting the training data for each area, wherein
the learning means learns the cost function for each area using the extracted training data for each area.

(Supplementary note 4) The driving evaluation system according to Supplementary note 3, wherein the data extraction means extracts the training data of the expert from candidate training data based on predetermined criteria.

(Supplementary note 5) The driving evaluation system according to any one of Supplementary notes 1 to 4, wherein
the evaluation means calculates differences between the driving of the expert and the driving of the subject in chronological order, and notifies contents indicating the difference when the calculated difference meets a predetermined notification condition.

(Supplementary note 6) The driving evaluation system according to any one of Supplementary notes 1 to 5, wherein
the evaluation means cumulatively adds scores in chronological order based on a predetermined method of scoring according to a difference between the driving of the expert and the driving of the subject, and displays an added result.

(Supplementary note 7) The driving evaluation system according to any one of Supplementary notes 1 to 6, wherein
the function input means accepts input of the cost function that includes terms as the linear sum in which each feature indicating the environment when driving is weighted by the degree of emphasis.

(Supplementary note 8) A learning device comprising:

function input means for accepting input of a cost function expressed as a linear sum of terms in which each feature indicating driving of a driver is weighted by a degree of emphasis; and
learning means for learning the cost function for each area by inverse reinforcement learning using expert driving data as training data that includes information representing contents of driving of an expert collected for each area.

(Supplementary note 9) An evaluation result output device comprising:

driving data input means for accepting input of user driving data including information indicating driving of a subject whose driving is evaluated, information indicating environment when driving, and position information where these pieces of information were obtained; and
evaluation means for identifying an area where a user drives from the position information, selecting a cost function corresponding to the area among cost functions each learned for each area by inverse reinforcement learning using expert driving data as training data that includes information representing contents of driving of an expert collected for each area and expressed as a linear sum of terms in which each feature indicating driving of a driver is weighted by a degree of emphasis, applying the information indicating the environment when the subject drives to the selected cost function to estimate the driving of the expert in the same environment, and outputting an evaluation result comparing estimated driving of the expert with the driving of the subject.

(Supplementary note 10) A driving evaluation method comprising:

accepting input of a cost function expressed as a linear sum of terms in which each feature indicating driving of a driver is weighted by a degree of emphasis;
learning the cost function for each area by inverse reinforcement learning using expert driving data as training data that includes information representing contents of driving of an expert collected for each area;
accepting input of user driving data including information indicating driving of a subject whose driving is evaluated, information indicating environment when driving, and position information where these pieces of information were obtained;
identifying an area where a user drives from the position information, and selecting the cost function corresponding to the area;
applying the information indicating the environment when the subject drives to the selected cost function to estimate the driving of the expert in the same environment; and
outputting an evaluation result comparing estimated driving of the expert with the driving of the subject.

(Supplementary note 11) The driving evaluation method according to Supplementary note 10, further comprising outputting features included in the cost function and weights for the features in association with each other.

(Supplementary note 12) A learning method comprising:

accepting input of a cost function expressed as a linear sum of terms in which each feature indicating driving of a driver is weighted by a degree of emphasis; and
learning the cost function for each area by inverse reinforcement learning using expert driving data as training data that includes information representing contents of driving of an expert collected for each area.

(Supplementary note 13) An evaluation result output method comprising:

accepting input of user driving data including information indicating driving of a subject whose driving is evaluated, information indicating environment when driving, and position information where these pieces of information were obtained;
identifying an area where a user drives from the position information, and selecting a cost function corresponding to the area among cost functions each learned for each area by inverse reinforcement learning using expert driving data as training data that includes information representing contents of driving of an expert collected for each area and expressed as a linear sum of terms in which each feature indicating driving of a driver is weighted by a degree of emphasis;
applying the information indicating the environment when the subject drives to the selected cost function to estimate the driving of the expert in the same environment; and
outputting an evaluation result comparing estimated driving of the expert with the driving of the subject.

(Supplementary note 14) A program recording medium storing a learning program wherein the learning program causes a computer to execute:

a function input process of accepting input of a cost function expressed as a linear sum of terms in which each feature indicating driving of a driver is weighted by a degree of emphasis; and
a learning process of learning the cost function for each area by inverse reinforcement learning using expert driving data as training data that includes information representing contents of driving of an expert collected for each area.

(Supplementary note 15) A program recording medium storing an evaluation result output program wherein the evaluation result output program causes a computer to execute:

a driving data input process of accepting input of user driving data including information indicating driving of a subject whose driving is evaluated, information indicating environment when driving, and position information where these pieces of information were obtained; and
an evaluation process of identifying an area where a user drives from the position information, selecting a cost function corresponding to the area among cost functions each learned for each area by inverse reinforcement learning using expert driving data as training data that includes information representing contents of driving of an expert collected for each area and expressed as a linear sum of terms in which each feature indicating driving of a driver is weighted by a degree of emphasis, applying the information indicating the environment when the subject drives to the selected cost function to estimate the driving of the expert in the same environment, and outputting an evaluation result comparing estimated driving of the expert with the driving of the subject.

(Supplementary note 16) A learning program causes a computer to execute:

a function input process of accepting input of a cost function expressed as a linear sum of terms in which each feature indicating driving of a driver is weighted by a degree of emphasis; and
a learning process of learning the cost function for each area by inverse reinforcement learning using expert driving data as training data that includes information representing contents of driving of an expert collected for each area.

(Supplementary note 17) An evaluation result output program causes a computer to execute:

a driving data input process of accepting input of user driving data including information indicating driving of a subject whose driving is evaluated, information indicating environment when driving, and position information where these pieces of information were obtained; and
an evaluation process of identifying an area where a user drives from the position information, selecting a cost function corresponding to the area among cost functions each learned for each area by inverse reinforcement learning using expert driving data as training data that includes information representing contents of driving of an expert collected for each area and expressed as a linear sum of terms in which each feature indicating driving of a driver is weighted by a degree of emphasis, applying the information indicating the environment when the subject drives to the selected cost function to estimate the driving of the expert in the same environment, and outputting an evaluation result comparing estimated driving of the expert with the driving of the subject.

Although the present invention has been explained above with reference to the exemplary embodiments, the present invention is not limited to the above exemplary embodiments. Various changes can be made to the configuration and details of the present invention that can be understood by those skilled in the art within the scope of the present invention.

**Reference Signs List**

1 Driving evaluation system
100 Vehicle
101 In-vehicle equipment
110, 210, 310, 410 Controller
111, 211, 311, 411 CPU
112, 212, 312, 412 Memory
120, 220, 320, 420 Communication unit
130, 230, 440 Storage unit
140 Out-vehicle camera
150 Sensor for vehicle information
160 Biosensor
170 In-vehicle camera
200 Smartphone
240, 330, 430 Input unit
250 Movement information DB
300 Evaluation result output device
340 Operating result DB
350 User DB
360 Display
370 Evaluation unit
400 Learning device
450 Learning unit
451 Cost function input unit
452 Data extraction unit
453 Inverse reinforcement learning unit
454 Learning result output unit
500 Storage device
600 Display device

**Claims**

1.  A driving evaluation system comprising:

function input means for accepting input of a cost function expressed as a linear sum of terms in which each feature indicating driving of a driver is weighted by a degree of emphasis;
learning means for learning the cost function for each area by inverse reinforcement learning using expert driving data as training data that includes information representing contents of driving of an expert collected for each area;
driving data input means for accepting input of user driving data including information indicating driving of a subject whose driving is evaluated, information indicating environment when driving, and position information where these pieces of information were obtained; and
evaluation means for identifying an area where a user drives from the position information, selecting the cost function corresponding to the area, applying the information indicating the environment when the subject drives to the selected cost function to estimate the driving of the expert in the same environment, and outputting an evaluation result comparing estimated driving of the expert with the driving of the subject.

**2.** The driving evaluation system according to claim 1, further comprising
learning result output means for outputting features included in the cost function and weights for the features in association with each other.

**3.** The driving evaluation system according to claim 1 or 2, further comprising

data extraction means for extracting the training data for each area, wherein
the learning means learns the cost function for each area using the extracted training data for each area.

**4.** The driving evaluation system according to claim 3, wherein
the data extraction means extracts the training data of the expert from candidate training data based on predetermined criteria.

**5.** The driving evaluation system according to any one of claims 1 to 4, wherein
the evaluation means calculates differences between the driving of the expert and the driving of the subject in chronological order, and notifies contents indicating the difference when the calculated difference meets a predetermined notification condition.

**6.** The driving evaluation system according to any one of claims 1 to 5, wherein
the evaluation means cumulatively adds scores in chronological order based on a predetermined method of scoring according to a difference between the driving of the expert and the driving of the subject, and displays an added result.

**7.** The driving evaluation system according to any one of claims 1 to 6, wherein
the function input means accepts input of the cost function that includes terms as the linear sum in which each feature indicating the environment when driving is weighted by the degree of emphasis.

**8.** A learning device comprising:

function input means for accepting input of a cost function expressed as a linear sum of terms in which each feature indicating driving of a driver is weighted by a degree of emphasis; and
learning means for learning the cost function for each area by inverse reinforcement learning using expert driving data as training data that includes information representing contents of driving of an expert collected for each area.

**9.** An evaluation result output device comprising:

driving data input means for accepting input of user driving data including information indicating driving of a subject whose driving is evaluated, information indicating environment when driving, and position information where these pieces of information were obtained; and
evaluation means for identifying an area where a user drives from the position information, selecting a cost function corresponding to the area among cost functions each learned for each area by inverse reinforcement learning using expert driving data as training data that includes information representing contents of driving of an expert collected for each area and expressed as a linear sum of terms in which each feature indicating driving of a driver is weighted by a degree of emphasis, applying the information indicating the environment when the subject drives to the selected cost function to estimate the driving of the expert in the same environment, and outputting an evaluation result comparing estimated driving of the expert with the driving of the subject.

**10.** A driving evaluation method comprising:

accepting input of a cost function expressed as a linear sum of terms in which each feature indicating driving of a driver is weighted by a degree of emphasis;
learning the cost function for each area by inverse reinforcement learning using expert driving data as training data that includes information representing contents of driving of an expert collected for each area;
accepting input of user driving data including information indicating driving of a subject whose driving is evaluated, information indicating environment when driving, and position information where these pieces of information were obtained;
identifying an area where a user drives from the position information, and selecting the cost function corresponding to the area;

14

applying the information indicating the environment when the subject drives to the selected cost function to estimate the driving of the expert in the same environment; and
outputting an evaluation result comparing estimated driving of the expert with the driving of the subject.

11. The driving evaluation method according to claim 10, further comprising
outputting features included in the cost function and weights for the features in association with each other.

12. A learning method comprising:

accepting input of a cost function expressed as a linear sum of terms in which each feature indicating driving of a driver is weighted by a degree of emphasis; and
learning the cost function for each area by inverse reinforcement learning using expert driving data as training data that includes information representing contents of driving of an expert collected for each area.

13. An evaluation result output method comprising:

accepting input of user driving data including information indicating driving of a subject whose driving is evaluated, information indicating environment when driving, and position information where these pieces of information were obtained;
identifying an area where a user drives from the position information, and selecting a cost function corresponding to the area among cost functions each learned for each area by inverse reinforcement learning using expert driving data as training data that includes information representing contents of driving of an expert collected for each area and expressed as a linear sum of terms in which each feature indicating driving of a driver is weighted by a degree of emphasis;
applying the information indicating the environment when the subject drives to the selected cost function to estimate the driving of the expert in the same environment; and
outputting an evaluation result comparing estimated driving of the expert with the driving of the subject.

14. A program recording medium storing a learning program wherein
the learning program causes a computer to execute:

a function input process of accepting input of a cost function expressed as a linear sum of terms in which each feature indicating driving of a driver is weighted by a degree of emphasis; and
a learning process of learning the cost function for each area by inverse reinforcement learning using expert driving data as training data that includes information representing contents of driving of an expert collected for each area.

15. A program recording medium storing an evaluation result output program wherein
the evaluation result output program causes a computer to execute:

a driving data input process of accepting input of user driving data including information indicating driving of a subject whose driving is evaluated, information indicating environment when driving, and position information where these pieces of information were obtained; and
an evaluation process of identifying an area where a user drives from the position information, selecting a cost function corresponding to the area among cost functions each learned for each area by inverse reinforcement learning using expert driving data as training data that includes information representing contents of driving of an expert collected for each area and expressed as a linear sum of terms in which each feature indicating driving of a driver is weighted by a degree of emphasis, applying the information indicating the environment when the subject drives to the selected cost function to estimate the driving of the expert in the same environment, and outputting an evaluation result comparing estimated driving of the expert with the driving of the subject.

# FIG. 1

# FIG. 2

| CATEGORY | OBJECT | INFORMATION TYPE | EXAMPLE (ITEM) |
|---|---|---|---|
| INSIDE OF VEHICLE | DRIVER | BIOMETRIC INFORMATION | PULSE, HEARTBEAT, BODY TEMPERATURE |
| | | OPERATION INFORMATION | ACCELERATOR POSITION, BRAKE, STEERING WHEEL |
| | | DRIVING INFORMATION | PAST DRIVING HISTORY, ACCIDENT HISTORY, TOTAL OPERATING TIME |
| | PASSENGER | BIOMETRIC INFORMATION | PULSE, HEARTBEAT, BODY TEMPERATURE |
| | VEHICLE | ENGINE INFORMATION | ENGINE ROTATION SPEED, VEHICLE SPEED |
| | | POSITION INFORMATION | GPS |
| | | VEHICLE INFORMATION | LICENSE PLATE, TURNING ON OR OFF OF LIGHT |
| OUTSIDE OF VEHICLE | ROAD | ROAD INFORMATION | ROAD SHAPE, CONGESTION INFORMATION, SIGNAL INFORMATION, LANE INFORMATION, FREEZING OR NON-FREEZING, GETTING WET, etc. |
| | VEHICLE | POSITION INFORMATION | GPS |
| | PEDESTRIAN | POSITION INFORMATION | GPS |
| | MOTOR-CYCLE | POSITION INFORMATION | GPS |
| | BICYCLE | POSITION INFORMATION | GPS |
| TIME | - | TIME INFORMATION | DATE, TIME ZONE, DAY OF WEEK, HOLIDAY, DAY OFF |
| WEATHER | - | WEATHER | AIR CAPACITY, RAINFALL, WEATHER, SNOWFALL, ILLUMINANCE |

# FIG. 3

450

| LEARNING UNIT |
|---|
| COST FUNCTION INPUT UNIT — 451 |
| DATA EXTRACTION UNIT — 452 |
| INVERSE REINFORCEMENT LEARNING UNIT — 453 |
| LEARNING RESULT OUTPUT UNIT — 454 |

# FIG. 4

# FIG. 5

OUTPUT IMAGE (DRIVING SPEED)

- - - DRIVER B (SPEED)　——— EXPERT (SPEED)　– – DRIVER A (SPEED)

# FIG. 6

START

ACCEPT INPUT OF COST FUNCTION — S11

LEARN COST FUNCTION FOR EACH AREA BY INVERSE REINFORCEMENT LEARNING USING EXPERT DRIVING DATA COLLECTED FOR EACH AREA AS TRAINING DATA — S12

END

# FIG. 7

START

S21

ACCEPT INPUT OF USER DRIVING DATA

S22

IDENTIFY AREA WHERE USER DRIVES FROM POSITION INFORMATION AND SELECT COST FUNCTION CORRESPONDING TO AREA

S23

APPLY INFORMATION INDICATING ENVIRONMENT WHEN SUBJECT DRIVES TO SELECTED COST FUNCTION TO ESTIMATE DRIVING OF EXPERT IN SAME ENVIRONMENT

S24

OUTPUT EVALUATION RESULT COMPARING ESTIMATED DRIVING OF EXPERT WITH DRIVING OF SUBJECT

END

# FIG. 8

DRIVING EVALUATION SYSTEM 70

FUNCTION INPUT MEANS 71

LEARNING MEANS 72

DRIVING DATA INPUT MEANS 73

EVALUATION MEANS 74

# FIG. 9

80

**LEARNING DEVICE**

81
FUNCTION INPUT MEANS

82
LEARNING MEANS

# FIG. 10

**EVALUATION RESULT OUTPUT DEVICE** — 90

DRIVING DATA INPUT MEANS — 91

EVALUATION MEANS — 92

<table>
<tr><td colspan="2" align="center">**INTERNATIONAL SEARCH REPORT**</td><td>International application No.</td></tr>
<tr><td colspan="2"></td><td>PCT/JP2020/048743</td></tr>
</table>

| A. CLASSIFICATION OF SUBJECT MATTER |
|---|
| G09B 19/00(2006.01)i; G01C 21/26(2006.01)i; G06N 20/00(2019.01)i; G09B 9/042(2006.01)i; G09B 19/16(2006.01)i |
| FI: G09B19/00 H; G09B19/16; G09B9/042; G06N20/00; G01C21/26 C |
| |
| According to International Patent Classification (IPC) or to both national classification and IPC |

| B. FIELDS SEARCHED |
|---|
| Minimum documentation searched (classification system followed by classification symbols) |
| G09B19/00; G01C21/26; G06N20/00; G09B9/042; G09B19/16 |

| Documentation searched other than minimum documentation to the extent that such documents are included in the fields searched | |
|---|---|
| Published examined utility model applications of Japan | 1922–1996 |
| Published unexamined utility model applications of Japan | 1971–2021 |
| Registered utility model specifications of Japan | 1996–2021 |
| Published registered utility model applications of Japan | 1994–2021 |

| Electronic data base consulted during the international search (name of data base and, where practicable, search terms used) |
|---|
| |

| C. DOCUMENTS CONSIDERED TO BE RELEVANT | | |
|---|---|---|
| Category* | Citation of document, with indication, where appropriate, of the relevant passages | Relevant to claim No. |
| A | WO 2019/167457 A1 (SONY CORP.) 06 September 2019 (2019-09-06) paragraphs [0095]-[0169] | 1-15 |
| A | WO 2020/115904 A1 (NEC CORP.) 06 November 2020 (2020-11-06) paragraphs [0015]-[0058] | 1-15 |
| A | WO 2020/183609 A1 (MITSUBISHI ELECTRIC CORP.) 17 September 2020 (2020-09-17) paragraphs [0028]-[0054] | 1-15 |
| A | WO 2019/150452 A1 (NEC CORP.) 08 August 2019 (2019-08-08) paragraphs [0015]-[0055] | 1-15 |

☒ Further documents are listed in the continuation of Box C.     ☒ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 15 March 2021 (15.03.2021) | 30 March 2021 (30.03.2021) |

| Name and mailing address of the ISA/ | Authorized officer |
|---|---|
| Japan Patent Office 3-4-3, Kasumigaseki, Chiyoda-ku, Tokyo 100-8915, Japan | |
| | Telephone No. |

Form PCT/ISA/210 (second sheet) (January 2015)

## INTERNATIONAL SEARCH REPORT

| | International application No. |
|---|---|
| | PCT/JP2020/048743 |

C (Continuation). DOCUMENTS CONSIDERED TO BE RELEVANT

| Category* | Citation of document, with indication, where appropriate, of the relevant passages | Relevant to claim No. |
|---|---|---|
| A | 第6章 機械学習とデータマイニング[6-10]強化学習, 人工知能学大事典, 共立出版, 01 July 2017, ISBN:978-4-320-12420-2, URL: https://www.kyoritsu-pub.co.jp/ai/pdf/6-10reinforcementlearning.pdf, in particular, page 304, non-official translation ("Chapter 6 Machine learning and data mining [6-10] Reinforcement Learning, Reinforcement Learning", ENCYCLOPEDIA OF ARTIFICIAL INTELLIGENCE, KYORITSU SHUPPAN CO., LTD.) | 1-15 |
| A | 「熟練者と同レベルの意思決定ができる」AI、NECが開発「逆強化学習」で「意図」を学習, ITmedia, 17 July 2019, URL: https://www.itmedia.co.jp/news/articles/1907/17/news095.html, in particular, page 1, non-official translation ("AI developed by NEC that 'can make decisions at the same level as experts', Learn 'intention' with 'inverse reinforcement learning'") | 1-15 |
| A | US 2019/0072959 A1 (PALANISAMY et al.) 07 March 2019 (2019-03-07) paragraphs [0051]-[0070] | 1-15 |

Form PCT/ISA/210 (continuation of second sheet) (January 2015)

International application No.

PCT/JP2020/048743

| Patent Documents referred in the Report | Publication Date | Patent Family | Publication Date |
|---|---|---|---|
| WO 2019/167457 A1 | 06 Sep. 2019 | (Family: none) | |
| WO 2020/115904 A1 | 06 Nov. 2020 | (Family: none) | |
| WO 2020/183609 A1 | 17 Sep. 2020 | (Family: none) | |
| WO 2019/150452 A1 | 08 Aug. 2019 | (Family: none) | |
| US 2019/0072959 A1 | 07 Mar. 2019 | CN 109460015 A | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2020049737 A